# EUROPÄISCHE PATENTSCHRIFT

(11) **EP 3 623 218 B1**
(45) Veröffentlichungstag und Bekanntmachung des Hinweises auf die Patenterteilung: **30.06.2021**
(21) Anmeldenummer: 19196808.0
(22) Anmeldetag: 11.09.2019
(51) Int. Cl.: B60P 1/64

(54) **SCHLITTEN FÜR EIN TRANSPORTFAHRZEUG ZUM TRANSPORTIEREN VON ROLLBEHÄLTERN**
CARRIAGE FOR A TRANSPORT VEHICLE FOR TRANSPORTING ROLLING CONTAINERS
CHARIOT POUR UN VÉHICULE DE TRANSPORT DESTINÉ AU TRANSPORT DE CONTENEURS ROULANTS

(30) Priorität: 12.09.2018 DE 102018122318
(43) Veröffentlichungstag der Anmeldung: 18.03.2020
(73) Patentinhaber: Hüffermann Transportsysteme GmbH, 16845 Neustadt/Dosse (DE)
(72) Erfinder:
(74) Vertreter: Eisenführ Speiser

(56) Entgegenhaltungen:
- EP-A2- 2 993 079
- DE-A1- 2 332 849
- DE-A1- 4 412 085
- DE-A1-102013 210 974
- DE-U1-202005 002 137
- DE-U1-202014 007 314

## Beschreibung

Die Erfindung betrifft einen Schlitten für ein Transportfahrzeug zum Transportieren von Rollbehältern sowie eine Sicherungseinrichtung für Behälterrollen zur Anwendung in Transportfahrzeugen zum Transportieren von Rollbehältern. Die Erfindung betrifft außerdem eine Sicherungseinrichtung für Behälterrollen auf einem Transportfahrzeug zum Transport von Rollbehältern sowie ein Transportfahrzeug mit einer Sicherungseinrichtung für Behälterrollen.

Rollbehälter sind Behälter mit Rollen und werden vielfach zum Sammeln und Transportieren von Schütt- und Stückgütern verwendet. Zu den Rollbehältern zählen z. B. standardisierte Abrollbehälter mit einem quaderförmigen Behälter, einem Aufnahmebügel für das Ladegerät an der Stirnseite, Hecktüren sowie einem Unterrahmen mit einem Rollenpaar, das den Rollbehälter verrollbar macht. Darüber hinaus gibt es viele Sonderkonstruktionen, die das Abrollbehältersystem nutzen oder modifiziert verwenden, die mit unterschiedlichen Aufbauten und mitunter auch beidseitig mit Rollenpaaren und/oder Aufnahmebügeln ausgestattet sind. Ein Rollbehälter der hier betroffenen Art ist ein Behälter oder auch ein Spezialaufbau, der Laufrollen für die Lade- bzw. Umsetzvorgänge nutzt und mindestens ein Aufnahmeteil z.B. einen Bügel besitzt, an dem ein Ladegerät angreifen kann.

Spezielle Ladegeräte heben und ziehen die Rollbehälter vom Boden auf das Transportfahrzeug bzw. schieben die Behälter wieder auf die vorgesehene Abstellfläche. Die mit dem Ladegerät ausgestatteten Fahrzeuge können auch dazu genutzt werden, andere Transportfahrzeuge mit einem Rollbehälter zu be- und entladen, indem sie den Behälter vom eigenen auf ein anderes Fahrzeug schieben und in umgekehrter Weise entladen.

Um den Behälter von der Behälteraufsetzposition an der Heck- oder Stirnseite des Transportfahrzeugs in die Behältertransportposition zu bringen, besitzt das zu beladene Transportfahrzeug entweder Laufrollenbahnen, auf denen der Rollbehälter mit seinen Rollen rollen kann, oder es ist mit einem Schlitten ausgestattet, der den darauf platzierten Rollbehälter in Fahrzeuglängsrichtung in die Transportposition bewegt. Die Schlittenvarianten sind wegen ihrer geringeren Eigenmasse und der dadurch möglichen höheren Transportmassen vorteilhaft.

Ein Transportfahrzeug für Rollbehälter der hier betroffenen Art ist ein Fahrzeug für den Rollbehältertransport ohne eigenes Ladegerät, das mit einem Schlittensystem ausgerüstet ist. Das Transportfahrzeug kann sowohl ein Lastkraftwagen als auch ein Anhängefahrzeug sein. Ein derartiges Transportfahrzeug ist in der Regel mit genau einem Schlitten ausgestattet, um damit einen Rollbehälter aufzunehmen und zu transportieren. Bei kurzen Rollbehältern oder in Ländern, deren zulässige Transportlängen die Beförderung von zwei Rollbehältern erlauben, sind auch Anhängefahrzeuge mit zwei Schlitten möglich.

Bei der Beladung und auch bei der Entladung des Transportfahrzeugs befindet sich der Schlitten in einer Behälteraufsetzposition, das heißt in einem kurzen Abstand zu dem heranfahrenden Fahrzeug mit dem Ladegerät und dem Behälter, beispielsweise am Fahrzeugheck. Bei speziellen Anhängern wie z.B. Kippanhängern oder auch besonderen Umschlagtechnologien kann das Übersetzen des Behälters auch von vorne - also von der Deichselseite des Anhängefahrzeuges - erfolgen.

Von der Behälteraufsetzposition aus wird der Rollbehälter durch den Schub des Ladegerätes auf dem Schlitten in die Behältertransportposition verfahren. Dabei wird der Rollbehälter in dem Bereich, wo sich seine Behälterrollen befinden, von dem Schlitten getragen und die Fahrzeuglängsträger bilden in der Regel die Schienenbahn, auf der der Schlitten gleitet oder rollt.

Um rollfähig zu sein, ragen die Rollen unter die Aufstandsfläche des Behälterunterbaus. Der Schlitten des Transportfahrzeuges besitzt deshalb Vertiefungen als Rollenaufnahmen zur Aufnahme der Rollen.

Selten erlauben die Übersetzbedingungen, dass das Ladegerät den Behälter direkt und unmittelbar auf dem Schlitten absetzen kann. In der Regel wird der Rollbehälter über Leiteinrichtungen mit Führungsfunktion auf den Schlitten manövriert und mit den Rollen in die Rollenaufnahmen gerollt, wobei der Weg in die Vertiefungen und auch wieder heraus oft durch schräge Rampen an den Vertiefungen möglich bzw. erleichtert wird. Der Weg, auf dem eine Behälterrolle in eine entsprechende Rollenaufnahme geführt wird, ist nachfolgend als Rollenzuführungskontur bezeichnet und kann sowohl durch Teile des Schlittens, des Fahrgestells oder durch beides gebildet werden.

Im Rahmen dieser Beschreibung werden die Richtungen und Lagezuordnungen für den Schlitten und dessen Komponenten wie folgt definiert: die der Behältertransportposition des Schlittens zugewandte Seite ist "vorn", die in Richtung Behälteraufsetzposition zeigende Seite ist "hinten". Unabhängig von der Beladerichtung am Anhänger wird ein Rollbehälter entsprechend dieser Festlegung bei der Beladung mit seinen Rollen über den hinteren Teil des Schlittens in die Rollenaufnahmen geführt, der Schlitten bewegt sich bei der Beladung nach vorn in Richtung seiner Behältertransportposition.

Die Transportprozesse erfordern eine wirksame Ladungssicherung, in diesem Fall des Rollbehälters. Übliche Maßnahmen sind Klauenverriegelungen, die den Behälter an seinem Unterrahmen auf dem Fahrzeug niederspannen und beispielsweise in DE 44 12 085 dargestellt sind, des Weiteren Anschläge und Zentrierungen.

Ebenso notwendig ist es einen Rollbehälter auf dem Schlitten zu sichern, womit das Herausrollen oder Herausspringen des Rollbehälters mit seinen Rollen aus der Rollenaufnahme des Schlittens verhindert werden soll. Diese Sicherung muss während des Straßentransportes unter anderem die Verzögerungskräfte beim Bremsen in Fahrtrichtung und auch beim Rückwärtsfahren aufnehmen.

Eine vordere Begrenzung der Vertiefung der Rollenaufnahme kann soweit erhöht werden, dass sie als Anschlag wirkt. Auf diese Weise kann eine Behälterrolle in der Vertiefung der Rollenaufnahme in der Beladerichtung gesichert werden, was für ein vom Heck aus beladenes Transportfahrzeug der Fahrtrichtung während des Transportes entspricht.

Diese Möglichkeit besteht in der Gegenrichtung an der hinteren Begrenzung der Rollenaufnahme nur eingeschränkt, da dieser Bereich überrollbar sein muss und typischerweise als schräge Rampe ausgeführt ist, wodurch es in gestimmten Fahrsituationen zu Gefährdungen oder Schäden kommen kann.

Aber auch bei der Entladung des Behälters vom Fahrzeug kann es passieren, dass der Behälter mit seinen Rollen mangels Rückhalt über die Rampe aus den Rollenaufnahmen gezogen wird, bevor der Schlitten seine vorgesehene Endposition erreicht hat. Zusätzlich dazu kann der Schlitten dann bei einer anschließenden Leerfahrt nicht durch die in der Behälteraufsetzposition vorgesehenen Maßnahmen lagegesichert werden, sodass sich der Schlitten bei der Leerfahrt unkontrolliert bewegen kann und vor einem erneuten Behälterübersetzen in die Behälteraufsetzposition manuell zurückgezogen werden muss.

Dokument DE 20 2005 002137 U1 offenbart einen Schlitten gemäß dem Oberbegriff des Anspruchs 1 und eine Sicherungseinrichtung gemäß dem Oberbegriff des Anspruchs 5. Z

Ziel der Erfindung ist es, eine verbesserte Sicherung von Behälterrollen auf einem Schlitten zu schaffen, die die für den Stand der Technik benannten Nachteile beseitigt, insbesondere verhindert, dass sich Behälterrollen aus entsprechenden Vertiefungen von Rollenaufnahmen eines Schlittens ungewollt heraus bewegen können.

Die vorstehende Aufgabe wird erfindungsgemäß durch eine Sicherungseinrichtung sowie einen Schlitten mit einer Sicherungseinrichtung für Behälterrollen auf einem Transportfahrzeug zum Transport von Rollbehältern mit den Merkmalen nach Anspruch 1 gelöst.

Entsprechend wird ein Schlitten für ein Transportfahrzeug zum Transportieren von Rollbehältern vorgeschlagen, der Vertiefungen als Rollenaufnahmen zur Aufnahme von Behälterrollen eines zu transportierenden Rollbehälters aufweist. Die Vertiefungen und damit die Rollenaufnahmen weisen jeweils eine Rampe auf, die so gestaltet ist, dass eine jeweilige Behälterrolle entlang der Rampe in die Vertiefung einfahren oder aus der Vertiefung ausfahren kann. Erfindungsgemäß ist im Bereich der Rampe eine Sicherungseinrichtung mit einem Sperrelement angeordnet, das zwischen einer Sperrstellung, in der das Sperrelement ein Ausfahren einer Rolle entlang der Rampe aus der Vertiefung blockiert, und einer Freigabestellung, in der das Sperrelement ein Ausfahren einer Rolle entlang der Rampe aus der Vertiefung ermöglicht, hin und her beweglich ist. Die Sicherungseinrichtung weist eine Verlagerungseinrichtung auf, die ausgebildet ist, das Sperrelement in seine Sperrstellung und/oder in seine Freigabestellung zu bewegen, wobei die Verlagerungseinrichtung eine Bewegung des Sperrelements aus seiner Freigabestellung in seine Sperrstellung oder umgekehrt in Verbindung mit der Schwerkraft einer mit dem Sperrelement verbundenen Masse, mit einer Federkraft einer mit dem Sperrelement mechanisch verbunden Feder und/oder mittels eines mit dem Sperrelement mechanisch verbunden Steuerglieds bewirkt, das so angeordnet ist, dass es im Anwendungsfall durch ein an dem Transportfahrzeug befestigtes Steuerelement betätigt wird, wenn sich der Schlitten relativ zum Transportfahrzeug bewegt. Die Verlagerungseinrichtung ist somit so ausgebildet, dass sie das Sperrelement beispielsweise sowohl in dessen Sperrstellung als auch in dessen Freigabestellung zwangsführt oder dass die Verlagerungseinrichtung das Sperrelement gegen eine rückstellende Gegenkraft, z. B. eine Federkraft oder die Schwerkraft, in dessen Sperrstellung oder dessen Freigabestellung bewegt.

Ausganspunkt ist ein Transportfahrzeug zum Transport von Rollbehältern, ausgerüstet mit einem Schlitten, auf dem der Rollbehälter platziert werden kann und bei der Beladung von der Behälteraufsetzposition in die Behältertransportposition und für die Entladung wieder zurück in die Behälteraufsetzposition verschoben wird. Der Schlitten besitzt Vertiefungen die als Rollenaufnahmen für die Behälterrollen dienen. Die Behälterrollen gelangen in die Rollenaufnahmen entlang einer Rollenführungskontur die z. B. eine schräge Rampe umfasst. Während die vorderen Begrenzungen der Rollenaufnahmen erhöht ausgeführt und als Frontanschlag dienen können, müssen die hinteren Begrenzungen - nämlich die Rampen - der Rollenaufnahmen für das Platzieren bzw. das Herunternehmen des Rollbehälters überrollbar sein, sodass in dieser Richtung eine geringere Sicherungswirkung für die Behälterrollen besteht.

Gemäß einer Variante der Erfindung ist vorgesehen, eine Behälterrolle in der Rollenaufnahme des Schlittens in Richtung einer hinteren Begrenzung der Rollenaufnahme dadurch zu sichern, dass ein Sperrelement im Bereich der Rollenaufnahme des Schlittens schwenkbar zwischen einer Sperrstellung in einer oberen Schwenkposition und einer Freigabestellung in einer unteren Schwenkposition angeordnet ist. In der oberen Schwenkposition überragt das Sperrelement hinter der in der Rollenaufnahme befindlichen Behälterrolle die Rampe und überdeckt die Behälterrolle teilweise oder vollständig. In seiner unteren Schwenkposition ist das Sperrelement unter die Rampe abgesenkt und damit von der Behälterrolle überrollbar. Um das Sperrelement in die gewünschte obere oder untere Schwenkposition zu führen und dort zu halten, können beispielsweise die eigene Schwerkraft, eine konfigurierte Verlagerungseinrichtung, ein in Verbindung mit der Schlittenbewegung auf das Sperrelement einwirkender Hindernis-Körper als Steuerelement oder Kombinationen dieser Maßnahmen genutzt werden. Ein oder mehrere Anschläge begrenzen die Bewegung des Sperrelementes in den Schwenkpositionen.

Bei der bevorzugten Ausführungsform der Erfindung ist ein Drehlager des schwenkbaren Sperrelementes unterhalb der Rampe bzw. der in der Rollenaufnahme befindlichen Behälterrolle angeordnet, sodass alle Komponenten in der unteren Schwenkposition unterhalb der zu überrollenden Kontur liegen und platzsparend innerhalb der Rollenbreite angeordnet sind. Alternativ allerdings mit höherem Aufwand wäre auch eine Lagerung des Sperrelementes außerhalb der Behälterrollenbreite z. B. durch zwei fluchtende Drehpunkte außerhalb der Rolle möglich.

Gemäß einer Ausführungsvariante ist vorgesehen, dass das drehbar gelagerte Sperrelement durch die eigene Schwerkraft in die gewünschte Schwenkposition, insbesondere die Sperrstellung geführt wird. Das geschieht zum Beispiel dadurch, dass das Sperrelement, stabilisierend wirkend, unterhalb des Drehpunktes eine größere Masse als oberhalb des Drehlagers besitzt, wodurch das Sperrelement in die obere Position geschwenkt wird. Alternativ oder als zusätzliche Unterstützung kann eine Verlagerungseinrichtung vorgesehen sein. Das können erfindungsgemäß Stahl, Luft oder Gummifedern sein, die anstelle oder zusätzlich zur Schwerkraft wirken können. Des Weiteren sind pneumatisch, hydraulisch oder elektrisch angetriebene Betätigungen wie z. B. Arbeitszylinder realisierbar. Sie sind insbesondere in den Bereichen der Behältertransportposition oder der Ausgangsstellung, am Fahrgestell montiert, geeignet das Sperrelement direkt oder indirekt zu bewegen, wobei bei dieser Befestigung die Energieversorgung der Verlagerungseinrichtungen nicht dem Verfahren des Schlittens folgen muss.

Eine weitere besondere Form der Verlagerungseinrichtung kann ein mechanisches Auslösesystem sein. Hierbei stößt das Sperrelement bei der Schlittenbewegung an ein Auslöseelement und wird von diesem in eine der Schwenkposition bewegt.

Vorzugsweise ist das Sperrelement 2 cm dick oder dicker ist. Das bedeutet, dass das Sperrelement beispielsweise aus einem Stahlblech mit einer Dicke von 2 cm oder mehr gefertigt ist.

Gemäß einer weiteren bevorzugten Ausführungsvariante kann das Sperrelement aus zwei oder mehreren parallel zueinander angeordneten Elementen zusammengesetzt sein.

In der Ausführungsvariante der Erfindung, gemäß der ein Hindernis-Körper vorgesehen ist, weist der Hindernis-Körper vorzugsweise eine Schräge auf und ist im Bereich der Behälteraufsetzposition so unterhalb des Schlittens angeordnet, dass sich das Sperrelement bei der Schlittenbewegung in die Behälteraufsetzposition mit seiner unteren Kontur auf der in der Bewegungsrichtung ansteigenden Bahn bewegt und dabei von der oberen in die untere Schwenkposition dreht.

Der Hindernis-Körper ist vorzugsweise im Bereich der Schlittentransportstellung bzw. davor beginnend so unterhalb der Schienenbahn für den Schlitten angeordnet, dass das Sperrelement direkt oder mittels Koppelglieder bei der Schlittenbewegung in die Behältertransportstellung mit seinem unteren Bereich gegen den Hindernis-Körper stößt oder auf dem Hindernis-Körper entlangfährt und dabei von der unteren in die obere Schwenkposition dreht.

Der Schlitten oder die Sicherungseinrichtung weist vorzugsweise ein Steuerglied auf, welches schwenkbar mit dem Sperrelement verbunden ist und in einer Längsführung an dem Schlitten schwenkbar und längsverschiebbar geführt ist, wobei ein freies Ende des Steuerglieds nach unten über die Unterkontur der Vertiefung des Schlittens hinausragt. Das freie Ende des Steuerglieds kann somit bei einem sich bewegenden Schlitten mit einem feststehenden Steuerelement am Transportfahrzeug zusammenwirken, mit dem es im Verlauf einer Schlittenbewegung in Anschlag gerät und im Verlauf der weiteren Schlittenbewegung derart verlagert wird, dass es das Sperrelement aus seiner Freigabestellung in die Sperrstellung oder umgekehrt bewegt. Entsprechend ist an dem Transportfahrzeug vorzugsweise ein feststehendes Steuerelement an geeigneter Position vorgesehen.

Erfindungsgemäß wird die Aufgabe auch durch ein Transportfahrzeug gelöst, bei dem an einem Fahrzeugrahmen des Transportfahrzeugs eine Hindernis-Körper oder ein Steuerelement, z. B. in Form eines Anschlags, zum Auslenken des Sperrelements vorgesehen ist. Der Hindernis-Körper ist dort an dem Fahrzeugrahmen angeordnet, wo sich der Schlitten befindet, wenn das Sperrelement ausgelenkt werden soll.

Vorzugsweise besitzt das Sperrelement für die Bewegung auf dem Hindernis-Körper im unteren Bereich mindestens eine Rundung oder ist mit einer Rolle versehen.

In allen Ausführungsvarianten kann die Sicherung durch das Sperrelement einseitig für nur eine Behälterrolle oder paarweise für beide Laufrollen auf dem Schlitten vorgesehen sein.

Vorzugsweise weist die Sicherungseinrichtung mindestens einen Sensor auf, um mindestens eine Schwenkposition, bevorzugt die sichernde obere Schwenkposition des Sperrelementes zu erfassen.

Die Erfindung soll nun anhand von Ausführungsbeispielen mit Bezug auf die Figuren näher erläutert werden. Von den Figuren zeigt:
- Fig. 1:: ein Transportfahrzeug in Form eines Anhängers;
- Fig. 2a:: das Transportfahrzeug aus Figur 1 ohne aufgesetzten Behälter;
- Fig. 2b:: einen vergrößerten Ausschnitt aus Figur 2a mit Details einer ersten Ausführungsform eines Schlittens mit einer Sicherungseinrichtung;
- Fig. 2c:: den Ausschnitt aus Figur 2b mit einer anderen Stellung des Sperrelements;
- Fig. 3a - 3d:: eine zweite Ausführungsform eines Schlittens mit einer Sicherungseinrichtung in Freigabestellung;
- Fig. 4a - 4c:: die zweite Ausführungsform eines Schlittens mit einer Sicherungseinrichtung in Sperrstellung;
- Fig. 5a:: eine dritte Ausführungsform eines Schlittens mit einer Sicherungseinrichtung in Freigabestellung; und
- Fig. 5b:: die dritte Ausführungsform eines Schlittens mit einer Sicherungseinrichtung in Sperrstellung.

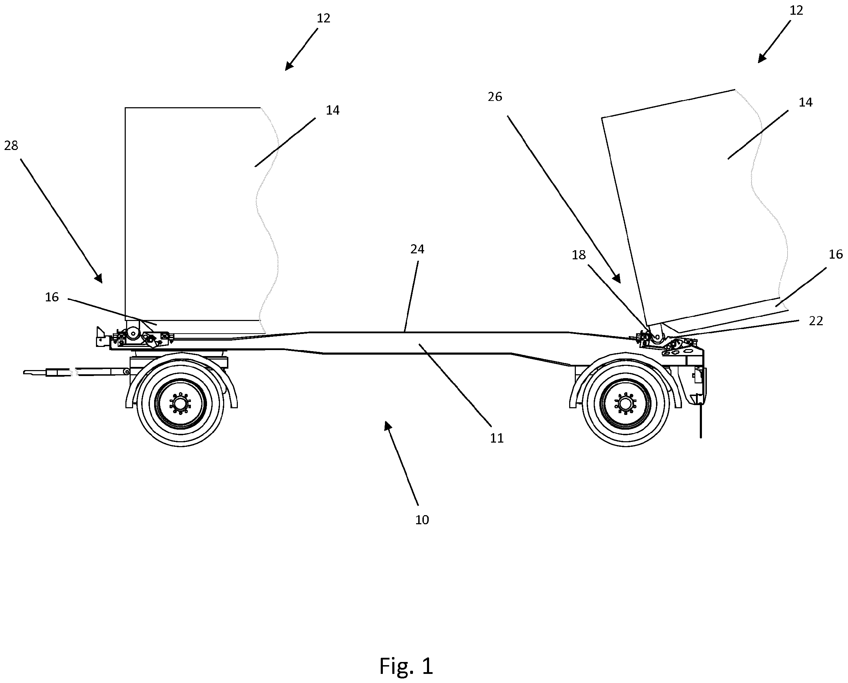

Figur 1 zeigt ein Transportfahrzeug 10 in Form eines Anhängers zum Transportieren von Rollbehältern, insbesondere Abrollbehältern. Das Transportfahrzeug 10 weist einen Fahrzeugrahmen 11 auf. Ein Abrollbehälter 12 ist schematisch dargestellt.

Der Abrollbehälter 12 weist einen quaderförmigen Behälter 14 auf, der auf einen Unterrahmen 16 montiert ist und an einem Längsende ein Rollenpaar 18 aufweist. Am gegenüberliegenden Längsende weist der Abrollbehälter einen Aufnahmebügel auf. Wenn der Behälter an dem Aufnahmebügel beispielsweise mit Hilfe eines Ladegeräts angehoben wird, kann der Abrollbehälter 12 auf seinem Rollenpaar 18 rollen.

Das in Figur 1 dargestellte Transportfahrzeug 10 besitzt einen Schlitten 22, der auf einer Schienenbahn 24 von einer Behälteraufsetzposition 26 zu einer Behältertransportposition 28 zu bewegen ist. Die Rollen des Rollenpaars 18 befinden sich dabei in entsprechenden Vertiefungen 30 des Schlittens 22.

Figur 1 zeigt auf der linken Seite den Schlitten 22 in der Behältertransportposition. Auf der rechten Seite der Figur 1 ist der gleiche Schlitten 22 in der Behälteraufsetzposition 26 dargestellt. Wie in Figur 1 angedeutet ist, wird der Behälter 14 beim Aufsetzen an seinem nicht dargestellten Ende angehoben und kann dann auf dem Schlitten 22 von der Behälteraufsatzposition 26 zu der Behältertransportposition 28 bewegt werden. Wenn sich der Schlitten 22 in der Behältertransportposition 28 befindet, liegt der Rollbehälter 12 mit seinem Unterrahmen 16 auf dem Transportfahrzeug 10 auf.

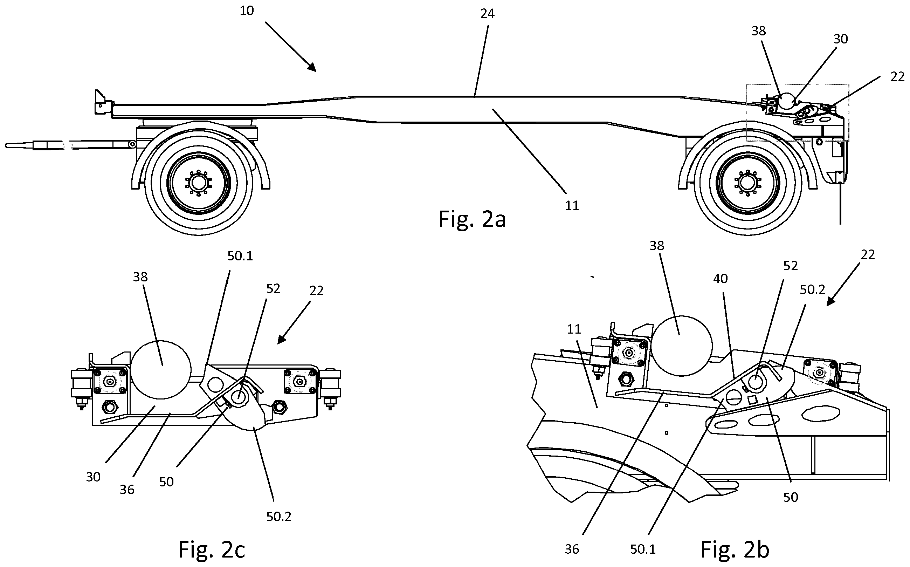

Figur 2a zeigt das Transportfahrzeug 10 ohne aufgesetzten Behälter mit dem Schlitten 22 in der Behälteraufsetzposition 26.

Figur 2b ist ein vergrößerter Ausschnitt aus Figur 2a und zeigt Details einer ersten Ausführungsform des Schlittens 22 mit einer Sicherungseinrichtung, die ein Sperrelement 50 aufweist.

Der Schlitten 22 besitzt eine Vertiefung 30 als Rollenaufnahme zum Aufnehmen einer Behälterrolle 38. Es sei darauf hingewiesen, dass die in den Figuren 2a und 2b dargestellte Behälterrolle 38 nicht Bestandteil des Schlittens 22 ist, sondern Bestandteil eines ansonsten nicht weiter dargestellten Rollbehälters. Die Vertiefung 30 weist an einem Ende eine Rampe 40 auf, die es einer Behälterrolle wie der Behälterrolle 38 erlaubt, in die Vertiefung 30 einzufahren oder aus der Vertiefung 30 auszufahren.

In dem dargestellten Ausführungsbeispiel ist die Rampe 40 so ausgeführt, dass sie bis zu einem Boden 36 der jeweiligen Rollenaufnahme 30 reicht. In alternativen, nicht dargestellten Ausführungsvarianten kann die Rampe auch in einem Abstand von dem Boden 36 der Rollenaufnahme 30 enden oder auch unterschiedliche Steigungen aufweisen.

Das Sperrelement 50 ist an einem Drehlager 52, welches an einer Unterseite der Rampe 40 befestigt ist, schwenkbar gelagert. Dadurch kann das Sperrelement 50 aus einer in Figur 2b dargestellten Freigabestellung in eine in Figur 2c dargestellte Sperrstellung schwenken. Die Rampe 40 ist mit einem Schlitz versehen, durch den das Sperrelement 50 hindurchschwenken kann, so dass ein Sperrende 50.1 des Sperrelements 50 in der Sperrstellung des Sperrelements 50 über die Rampe 40 hinausraus (siehe Figur 2c) während sich ein dem Sperrende 50.1 abgewandtes Ende 50.2 des Sperrelements 50 unterhalb der Rampe 40 befindet. Das Sperrelement 50 ist so gestaltet, dass das Sperrende 50.1 leichter ist, als das abgewandte Ende 50.2 so dass sich der Schwerpunkt des Sperrelements 50 derart neben der durch das Drehlager 52 definierten Schwenkachse befindet, dass das Sperrelement 50 allein durch die Gewichtskraft aus seiner Freigabestellung in die Sperrstellung schwenkt.

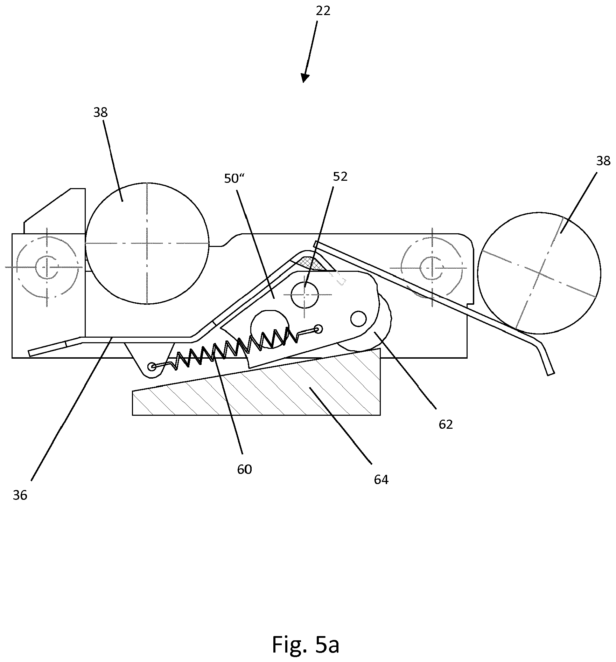

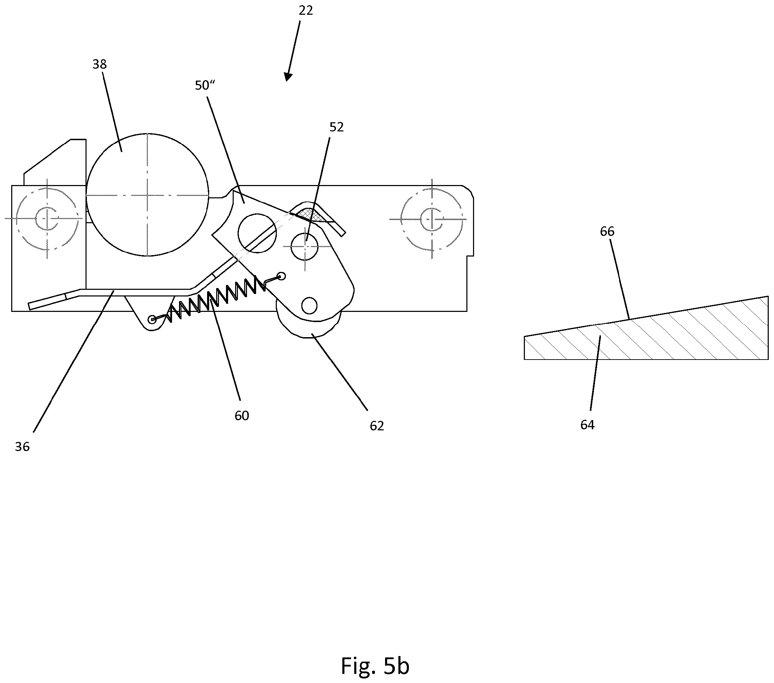

In alternativen Ausführungsvarianten (siehe beispielsweise Figuren 5a und 5b) wird das Schwenken des Sperrelements aus der Freigabestellung in die Sperrstellung durch Federkraft unterstützt.

In wiederum einer anderen Ausführungsvariante ist das Sperrelement mit einer aufwendigeren Verlagerungseinrichtung versehen die ein mit dem Sperrelement mechanisch verbundenes Steuerglied umfasst, welches mit einem an dem Transportfahrzeug ortsfest verbundenen Steuerelement zusammenwirkt wenn der Schlitten entlang der Schienenbahn 24 von der Behälteraufsetzposition zur Behältertransportposition oder umgekehrt bewegt wird.

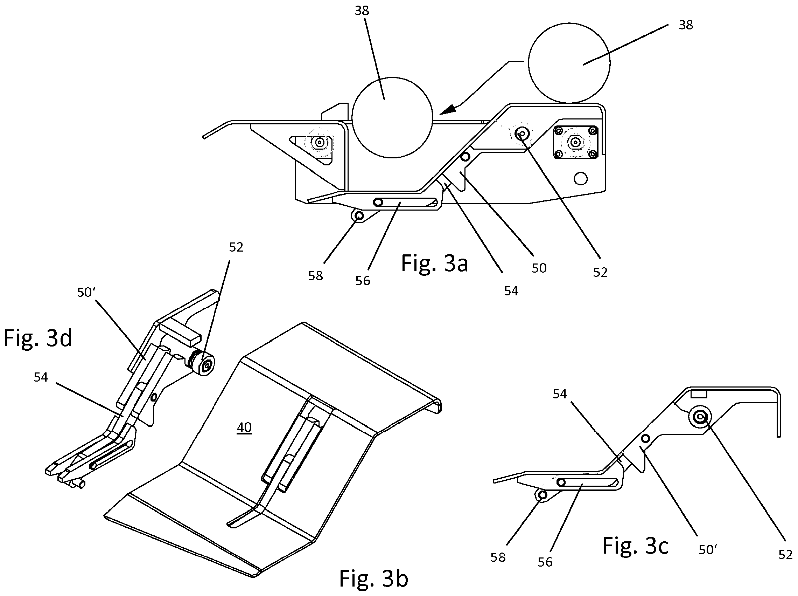

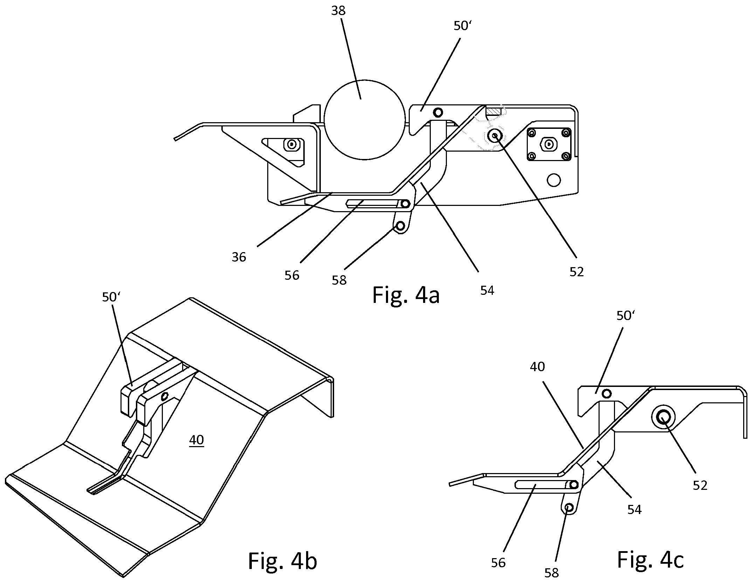

Figuren 3a bis 3d und 4a bis 4c zeigen ein entsprechendes Ausführungsbeispiel. Auch bei dem Ausführungsbeispiel in Figuren 3a bis 3d und 4a bis 4c ist das Sperrelement 50' um ein Drehlager 52' schwenkbar an dem Schlitten 22' befestigt. In dem Ausführungsbeispiel gemäß den Figuren 3a bis 3d und 4a bis 4c ist das Sperrelement 50' jedoch mit einem Steuerglied 54 schwenkbar verbunden. Das Steuerglied 54 ist in einer Längsführung 56 am Schlitten 22 schwenkbar und längsverschiebbar geführt. Ein freies Ende 58 des Steuerglieds 54 ragt nach unten über die Unterkontur der Vertiefung 30 des Schlittens 22 hinaus. Wenn sich der Schlitten 22 bewegt - beispielsweise in Bezug auf die Darstellung in Figuren 3a und 3d beziehungsweise 4a und 4c nach links - kann das freie Ende 58 des Steuerglieds 54 mit einem feststehenden Steuerelement (nicht dargestellt) am Transportfahrzeug in Anschlag geraten und im Verlauf einer weiteren Schlittenbewegung in Bezug auf den Schlitten von der in den Figuren 3a bis 3d dargestellten Stellung in die in den Figuren 4a bis 4c dargestellte Stellung geschoben werden. Dieses Verschieben des Steuerglieds 54 entlang der Längsführung 56 bewirkt, dass sowohl das Steuerglied 54 als auch das Sperrelement 50' so schwenken, dass das Sperrelement 50' im Ergebnis aus seiner Freigabestellung, die in Figuren 3a bis 3d dargestellt ist, in seine Sperrstellung, die in Figuren 4a bis 4c dargestellt ist, geschwenkt wird.

Figur 5a zeigt eine andere Variante eines Schlittens 22 mit einer Sicherungseinrichtung, die ein Sperrelement und eine Verlagerungseinrichtung aufweist. In dem in Figuren 5a und 5b dargestellten Ausführungsbeispielen ist das Sperrelement 50" ähnlich ausgebildet, wie das Sperrelement 50 aus den Figuren 2a bis 2c. Die Verlagerungseinrichtung besteht in dem in Figuren 5a und 5b dargestellten Ausführungsbeispielen jedoch nicht nur einfach in einem massebehafteten, abgewandten Ende des Sperrelements 50. Vielmehr umfasst die Verlagerungseinrichtung eine Zugfeder 60 und eine Rolle 62. Die Zugfeder 60 ist so zwischen Sperrelement 50" und Schlitten 22 gespannt, dass sie das Sperrelement 50" in seine in Figur 5b dargestellte Sperrstellung zieht.

Um das Sperrelement 50" aus seiner in Figur 5b dargestellten Sperrstellung in die in Figur 5a dargestellte Freigabestellung zu bewegen, ist im Heckbereich des Transportfahrzeugs 10 ein Steuerelement 64 mit einer Schräge 66 vorgesehen, welche die Rolle 62 an dem Sperrelement 50" anhebt, wenn die Rolle 62 aufgrund einer Schlittenbewegung - im dargestellten Ausführungsbeispiel nach rechts - auf das Steuerelement 64 trifft und auf der von dem Steuerelement 64 bereitgestellten Schräge 66 abrollt. Das durch das Steuerelement 64 bewirkte Anheben der Rolle 62 führt dazu, dass das Sperrelement 50" gegen die Kraft der Feder 60 aus der Sperrstellung in die Freigabestellung bewegt wird. Bei dem in Figuren 5a und 5b dargestellten Ausführungsbeispiel wird die Verlagerungseinrichtung somit von der Feder 60 und der Rolle 62 gebildet.

Wenn sich der Schlitten 22 in der Behälteraufsetzposition befindet, ist die Rolle 62 angehoben und das Sperrelement 50" befindet sich in der Freigabestellung; siehe Figur 5a. Sobald der Schlitten aus der Behälteraufsetzposition heraus in Richtung Behältertransportposition bewegt wird, wird die Rolle 62 nicht mehr angehoben und das Sperrelement 50" bewegt sich unter dem Einfluss der Federkraft der Feder 60 sowie der Schwerkraft in seine Sperrposition; siehe Figur 5b.
- 10: Transportfahrzeug
- 11: Fahrzeugrahmen
- 12: Abrollbehälter
- 14: Behälter
- 16: Unterrahmen
- 18: Rollenpaar
- 22: Schlitten
- 24: Schienenbahn
- 26: Behälteraufsetzposition
- 28: Behältertransportposition
- 30: Vertiefung als Rollenaufnahme
- 36: Boden
- 38: Behälterrolle
- 40: Rampe
- 50, 50', 50": Sperrelement
- 50.1: Sperrende
- 50.2: Ende
- 52: Drehlager
- 54: Steuerglied
- 56: Längsführung
- 58: freies Ende
- 60: Zugfeder
- 62: Rolle
- 64: Steuerelement, Hindernis-Körper
- 66: Schräge

## Patentansprüche

1. Schlitten (22) für ein Transportfahrzeug (10) zum Transportieren von Rollbehältern (12), mit Vertiefungen (30) als Rollenaufnahmen zur Aufnahme von Behälterrollen (38) eines zu transportierenden Rollbehälters, wobei die Vertiefungen (30) jeweils eine Rampe (40) aufweisen, die so gestaltet ist, dass eine jeweilige Behälterrolle (38) entlang der Rampe (40) in die Vertiefung (30) einfahren oder aus der Vertiefung (30) ausfahren kann,
**dadurch gekennzeichnet, dass** im Bereich der Rampe (40) eine Sicherungseinrichtung mit einem Sperrelement (50; 50'; 50") angeordnet ist, das zwischen einer Sperrstellung, in der das Sperrelement (50; 50'; 50") ein Ausfahren einer Behälterrolle (38) entlang der Rampe (40) aus der Vertiefung (30) blockiert, und einer Freigabestellung, in der das Sperrelement (50; 50'; 50") ein Ausfahren einer Behälterrolle (38) entlang der Rampe (40) aus der Vertiefung (30) ermöglicht, hin und her beweglich ist, wobei die Sicherungseinrichtung eine Verlagerungseinrichtung aufweist, die ausgebildet ist, das Sperrelement (50; 50'; 50") in seine Sperrstellung oder seine Freigabestellung zu bewegen, wobei die Verlagerungseinrichtung eine Bewegung des Sperrelements (50; 50'; 50") aus seiner Freigabestellung in seine Sperrstellung oder umgekehrt mittels Schwerkraft einer mit dem Sperrelement (50) verbundenen Masse, mittels Federkraft einer mit dem Sperrelement (50") mechanisch verbunden Feder und/oder mittels eines mit dem Sperrelement (50') mechanisch verbunden Steuerglieds (54) bewirkt, das so angeordnet ist, dass es im Anwendungsfall durch ein an dem Transportfahrzeug befestigtes Steuerelement (64) betätigt wird, wenn sich der Schlitten (22) relativ zum Transportfahrzeug bewegt.

2. Schlitten gemäß Anspruch 1, **dadurch gekennzeichnet, dass** die Sicherungseinrichtung derart ausgebildet ist, dass das Sperrelement (50; 50'; 50") beim Einfahren einer Behälterrolle (38) in die Vertiefung (30) von der Behälterrolle (38) in die Freigabestellung bewegt wird und somit in Einfahrrichtung überrollbar ist.

3. Schlitten gemäß Anspruch 2, **dadurch gekennzeichnet, dass** die Sicherungseinrichtung derart gestaltet ist, dass eine auslenkbare Masse der Verlagerungseinrichtung angehoben und/oder eine auslenkbare Feder der Verlagerungseinrichtung gespannt wird, wenn das Sperrelement (50; 50'; 50") in Einfahrrichtung überrollt wird.

4. Schlitten nach wenigstens einem der Ansprüche 1 bis 3, **dadurch gekennzeichnet, dass** das Sperrelement (50; 50'; 50") um ein an dem Schlitten (22) befestigtes Drehlager (52) schwenkbar ist.

5. Sicherungseinrichtung für Behälterrollen (38) auf einem Transportfahrzeug (10) zum Transport von Rollbehältern (12), welches mit einem Schlitten (22) ausgerüstet ist, um einen auf dem Schlitten platzierten Rollbehälter (12) bei der Fahrzeugbeladung von der Behälteraufsetzposition (26) in die Behältertransportposition (28) und für die Entladung wieder in die Behälteraufsetzposition (26) zu bewegen, wobei sich die Behälterrollen (38) des Rollbehälters (12) in dafür vorgesehenen Rollenaufnahmen des Schlittens (22) befinden, die als Vertiefung (30) ausgebildet sind und in die die Behälterrollen (38) in der Behälteraufsetzposition (26) entlang einer Rampe (40) gelangen, wobei die Rampen (40) der Rollenaufnahmen (30) für das Platzieren bzw. das Herunternehmen des Rollbehälters (12) überrollbar sind,
**dadurch gekennzeichnet, dass**
die Sicherungseinrichtung von einem Sperrelement (50; 50'; 50") an einem Schlitten (22) gebildet ist, das im Bereich der Vertiefung (30) der Rollenaufnahme des Schlittens (22) schwenkbar zwischen einer oberen Schwenkposition und einer unteren Schwenkposition angeordnet ist, wobei das Sperrelement (50; 50'; 50") in der oberen Schwenkposition hinter der in der Vertiefung (30) der Rollenaufnahme befindlichen Behälterrolle (38) die Rampe (40) überragt und die Behälterrolle (38) teilweise oder vollständig überdeckt, während das Sperrelement (50; 50'; 50") in seiner Freigabestellung (unteren Schwenkposition) unter die Oberseite der Rampe (40) abgesenkt und damit von der Behälterrolle (38) überrollbar ist, wobei das Sperrelement (50; 50'; 50") durch die eigene Schwerkraft und/oder mittels einer konfigurierten Verlagerungseinrichtung (54, 56, 58; 60, 62), durch einen in Verbindung mit der Schlittenbewegung auf das Sperrelement (50; 50'; 50") direkt oder indirekt einwirkenden Hindernis-Körper (64) oder durch Kombinationen der Maßnahmen in die gewünschte obere oder untere Schwenkposition geführt und dort gehalten wird.

6. Sicherungseinrichtung für Behälterrollen (38) auf einem Transportfahrzeug (10) zum Transport von Rollbehältern (12) nach Anspruch 5,
**dadurch gekennzeichnet, dass**
das Drehlager (52) des Sperrelementes (50; 50'; 50") unterhalb der Rampe (40) oder unterhalb der in der Vertiefung (30) der Rollenaufnahme befindlichen Behälterrolle (38) angeordnet ist.

7. Sicherungseinrichtung für Behälterrollen (38) auf einem Transportfahrzeug (10) zum Transport von Rollbehältern (12) nach einem der Ansprüche 5 oder 6,
**dadurch gekennzeichnet, dass**
die Verlagerungseinrichtung zum Verlagern des Sperrelementes (50; 50'; 50") zumindest eine Stahl- (60), Gummi- oder Luftfeder, einen pneumatischen oder hydraulischen Arbeitszylinder oder einen elektrischen Antrieb oder eine Kombination hiervon umfasst.

8. Sicherungseinrichtung für Behälterrollen (38) auf einem Transportfahrzeug (10) zum Transport von Rollbehältern (12) nach mindestens einem der vorhergehenden Ansprüche
**dadurch gekennzeichnet, dass**
das Sperrelement (50; 50'; 50") 2 cm dick oder dicker ist.

9. Sicherungseinrichtung für Behälterrollen (38) auf einem Transportfahrzeug (10) zum Transport von Rollbehältern (12) nach mindestens einem der vorhergehenden Ansprüche
**dadurch gekennzeichnet, dass**
das Sperrelement (50; 50'; 50") aus zwei oder mehreren parallelen Elementen zusammengesetzt ist.

10. Sicherungseinrichtung für Behälterrollen (38) auf einem Transportfahrzeug (10) zum Transport von Rollbehältern (12) nach mindestens einem der vorhergehenden Ansprüche
**dadurch gekennzeichnet, dass**
das Sperrelement (50") für die Bewegung auf einem Hindernis-Körper (64) im unteren Bereich mindestens eine Rundung besitzt oder mit einer Rolle (62) versehen ist.

11. Sicherungseinrichtung für Behälterrollen (38) auf einem Transportfahrzeug (10) zum Transport von Rollbehältern (12) nach mindestens einem der vorhergehenden Ansprüche
**dadurch gekennzeichnet, dass**
die Sicherung durch das Sperrelement (50, 50', 50") einseitig für eine Behälterrolle (38) oder paarweise für beide Laufrollen auf dem Schlitten (22) ausgeführt ist.

12. Sicherungseinrichtung für Behälterrollen (38) auf einem Transportfahrzeug (10) zum Transport von Rollbehältern (12) nach mindestens einem der vorhergehenden Ansprüche
**dadurch gekennzeichnet, dass**
sie mindestens einen Sensor aufweist, um mindestens eine Schwenkposition, bevorzugt die sichernde obere Schwenkposition des Sperrelementes (10) zu erfassen.

13. Transportfahrzeug (10) zum Transport von Rollbehältern (12),
mit einer Sicherungseinrichtung für Behälterrollen (38) nach mindestens einem der Ansprüche 5 bis 12
**dadurch gekennzeichnet, dass**
an einem Fahrzeugrahmen (11) des Transportfahrzeugs (10) ein Hindernis-Körper (64) vorgesehen ist, der eine Schräge (66) aufweist und im Bereich der Behälteraufsetzposition (26) so unterhalb des Schlittens (22) angeordnet ist, dass sich das Sperrelement (50") bei der Schlittenbewegung in die Behälteraufsetzposition (26) mit seiner unteren Kontur auf der in der Bewegungsrichtung ansteigenden Bahn bewegt und dabei von der oberen in die untere Schwenkposition dreht.

14. Transportfahrzeug (10) zum Transport von Rollbehältern (12),
mit einer Sicherungseinrichtung für Behälterrollen (38) nach mindestens einem der Ansprüche 5 bis 12
**dadurch gekennzeichnet, dass**
an einem Fahrzeugrahmen (11) des Transportfahrzeugs (10) ein Hindernis-Körper (64) im Bereich der Schlittentransportstellung (28) bzw. davor beginnend so unterhalb einer Schienenbahn (24) für den Schlitten (22) angeordnet ist, dass das Sperrelement (50') direkt oder mittels Koppelglieder (54) bei der Schlittenbewegung in die Behältertransportstellung (26) mit seinem unteren Bereich (58) gegen den Hindernis-Körper stößt oder auf dem Hindernis-Körper entlangfährt und dabei von der unteren in die obere Schwenkposition dreht.

## Claims

1. Slide (22) for a transport vehicle (10) for transporting roll containers (12), with recesses (30) as roller seats for receiving container rollers (38) of a roll container to be transported, the recesses (30) each having a ramp (40) that is designed in such a way that a respective container roller (38) can enter the recess (30) or exit the recess (30) along the ramp (40),
**characterized in that** a safety device with a blocking element (50; 50'; 50") is arranged in the area of the ramp (40), which can reciprocate between a blocking position in which the blocking element (50; 50'; 50") blocks the rolling of a container roller (38) along the ramp (40) out of the recess (30), and a release position in which the blocking element (50; 50'; 50") allows the rolling of a container roller (38) along the ramp (40) out of the recess (30); wherein the safety device features a displacement device that is designed to move the blocking element (50; 50'; 50") into its blocking position or its release position; wherein the displacement device causes a movement of the blocking element (50; 50'; 50") from its release position into its blocking position or vice versa by means of gravity through a mass connected to the blocking element (50), by means of spring force through a spring mechanically connected to the blocking element (50"), and/or by means of a control element (54) mechanically connected to the blocking element (50'), which control element is arranged in such a way that, during application, it is activated by a control element (64) attached to the transport vehicle when the slide (22) moves relative to the transport vehicle.

2. Slide according to claim 1, **characterized in that** the safety device is designed in such a way that the blocking element (50; 50'; 50") is moved to the release position by the container roller (38) when a container roller (38) moves into the recess (30), thus enabling over-rolling in the entry direction.

3. Slide according to claim 2, **characterized in that** the safety device is designed in such a way that a deflectable mass of the displacement device is raised and/or a deflectable spring of the displacement device is tensioned when the blocking element (50; 50'; 50") is rolled over in the entry direction.

4. Slide according to at least one of claims 1 to 3, **characterized in that** the blocking element (50; 50'; 50") can be rotated by means of a pivot bearing (52) attached to the slide (22).

5. Safety device for container rollers (38) on a transport vehicle (10) for transporting roll containers (12), which is equipped with a slide (22) to move a roll container (12) placed on the slide during vehicle loading from the container placement position (26) to the container transport position (28), and again to the container placement position (26) for unloading, wherein the container rollers (38) of the roll container (12) are located in roller receptacles of the slide (22) provided for this purpose, which are designed as a recess (30) and into which the container rollers (38) enter in the container placement position (26) along a ramp (40), wherein over-rolling of the ramps (40) of the roller receptacles (30) is possible for placing or removing the roll container (12),
**characterized in that**
the safety device is composed of a blocking element (50; 50'; 50") on a slide (22), which is pivotably arranged between an upper pivot position and a lower pivot position in the area of the recess (30) of the roller receptacle of the slide (22), wherein the blocking element (50; 50'; 50"), in the upper pivot position behind the container roller (38) located in the recess (30) of the roller receptacle, extends beyond the ramp (40) and partially or completely covers the container roller (38), while the blocking element (50; 50'; 50"), in its release position (lower pivot position), is lowered below the upper side of the ramp (40) and the container roller (38) can thus roll over it, wherein the blocking element (50; 50'; 50"), either through its own gravity and/or by means of a configured displacement device (54, 56, 58; 60, 62), by means of an obstacle body (64) acting directly or indirectly on the blocking element (50; 50'; 50") in connection with the slide movement, or by combining the measures, is guided into the desired upper or lower pivot position and held there.

6. Safety device for container rollers (38) on a transport vehicle (10) for transporting roll containers (12) according to claim 5,
**characterized in that**
the pivot bearing (52) of the blocking element (50; 50'; 50") is arranged below the ramp (40) or below the container roller (38) located in the recess (30) of the roller receptacle.

7. Safety device for container rollers (38) on a transport vehicle (10) for transporting roll containers (12) according to one of claims 5 or 6,
**characterized in that**
the displacement device for displacing the blocking element (50; 50'; 50") comprises at least one steel (60), rubber or air spring, a pneumatic or hydraulic working cylinder or an electric drive, or a combination of these.

8. Safety device for container rollers (38) on a transport vehicle (10) for transporting roll containers (12) according to at least one of the preceding claims,
**characterized in that**
the blocking element (50; 50'; 50") is 2 cm thick or thicker.

9. Safety device for container rollers (38) on a transport vehicle (10) for transporting roll containers (12) according to at least one of the preceding claims,
**characterized in that**
the blocking element (50; 50'; 50") is composed of two or several parallel elements.

10. Safety device for container rollers (38) on a transport vehicle (10) for transporting roll containers (12) according to at least one of the preceding claims,
**characterized in that**
the blocking element (50") for movement on an obstacle body (64) has at least one curve or a roller (62) in the lower area.

11. Safety device for container rollers (38) on a transport vehicle (10) for transporting roll containers (12) according to at least one of the preceding claims,
**characterized in that**
securing by the blocking element (50, 50', 50") is implemented on one side for one container roller (38) or in pairs for both rollers on the slide (22).

12. Safety device for container rollers (38) on a transport vehicle (10) for transporting roll containers (12) according to at least one of the preceding claims,
**characterized in that**
it has at least one sensor in order to detect at least one pivot position, preferably the securing upper pivot position of the blocking element (10).

13. Transport vehicle (10) for transporting roll containers (12),
with a safety device for container rollers (38) according to at least one of claims 5 to 12,
**characterized in that**
an obstacle body (64) is provided on a vehicle frame (11) of the transport vehicle (10), which obstacle body has a grade (66) and is arranged in the area of the container placement position (26) below the slide (22) in such a way that the blocking element (50") moves, during the slide movement, into the container placement position (26) with its lower contour on the track ascending in the direction of movement and, in the process, rotates from the upper to the lower pivot position.

14. Transport vehicle (10) for transporting roll containers (12),
with a safety device for container rollers (38) according to at least one of claims 5 to 12,
**characterized in that**
an obstacle body (64) is arranged on a vehicle frame (11) of the transport vehicle (10) in the area of, or before, the slide transport position (28) below a rail guide (24) for the slide (22) in such a way that the blocking element (50'), directly or by means of coupling elements (54), abuts against the obstacle body with its lower area (58) or moves along the obstacle body and thereby rotates from the lower to the upper pivot position when the slide moves into the container transport position (26).

## Revendications

1. Chariot (22) d'un véhicule (10) de transport pour le transport de conteneurs (12) roulants, comprenant des cavités (30) comme logements de rouleaux pour la réception de rouleaux (38) de conteneur d'un conteneur roulant à transporter, les cavités (30) ayant chacune une rampe (40) conformée de manière à ce qu'un rouleau (38) respectif de conteneur puisse, en suivant la rampe (40) entrer dans la cavité (30) ou en sortir.
**caractérisé en ce que** dans la région de la rampe (40) est disposé un dispositif de sécurité ayant un élément (50, 50', 50'') d'arrêt, qui est mobile en va-et-vient entre une position de blocage, dans laquelle l'élément (50, 50', 50'') d'arrêt bloque une sortie d'un rouleau (38) de conteneur de la cavité (30) en suivant la rampe (40), une position de déblocage, dans laquelle l'élément (50, 50', 50'') d'arrêt rend possible une sortie d'un rouleau (38) de conteneur de la cavité (30) en suivant la rampe (40), le dispositif de sécurité ayant un dispositif de déplacement constitué pour mettre l'élément (50, 50', 50'') d'arrêt dans sa position de blocage ou sa position de déblocage, le dispositif de déplacement provoquant un déplacement de l'élément (50, 50', 50'') d'arrêt de sa position de déblocage à sa position de blocage ou inversement au moyen de la force de pesanteur d'une masselotte reliée à l'élément (50) d'arrêt, au moyen d'une force de ressort d'un ressort relié mécaniquement à l'élément (50'') d'arrêt et/ou au moyen d'un organe (50) de commande relié mécaniquement à l'élément (50') d'arrêt, qui est disposé de manière à être actionné en cas d'utilisation par un élément (64) de commande fixé au véhicule de transport, lorsque le chariot (22) se déplace par rapport au véhicule de transport.

2. Chariot suivant la revendication 1, **caractérisé en ce que** le dispositif de sécurité est constitué de manière à ce que le rouleau (38) de conteneur met lorsqu'il entre dans la cavité (30), l'élément (50, 50', 50'') d'arrêt dans la position de déblocage et peut ainsi rouler dessus dans le sens de l'entrée.

3. Chariot suivant la revendication 2, **caractérisé en ce que** le dispositif de sécurité est conformé de manière à ce qu'une masselotte pouvant sortir du dispositif de déplacement soit soulevée et/ou qu'une ressort pouvant sortir du dispositif de déplacement soit tendu, lorsque le rouleau passe sur l'élément (50, 50', 50'') d'arrêt dans le sens de l'entrée.

4. Chariot suivant au moins l'une des revendications 1 à 3, **caractérisé en ce que** l'élément (50, 50', 50'') d'arrêt peut pivoter autour d'un coussinet (52) de pivotement fixé au chariot (22) .

5. Dispositif de sécurité pour des rouleaux (38) de conteneur sur un véhicule (10) de transport pour le transport de conteneurs (12) roulants, qui est équipé d'un chariot (22) afin de mettre un conteneur (12) roulant, placé sur le chariot, lors du chargement du véhicule de la position (26) de pose du conteneur à la position (28) de transport du conteneur et, pour le déchargement, le ramener à la position (26) de pose de conteneur, les rouleaux (38) du conteneur (12) roulant se trouvant dans des logements de rouleaux, prévus à cet effet ; du chariot (22), qui sont constitués sous la forme de cavités (30) et dans lesquel les rouleaux (38) du conteneur arrivent, dans la position (26) de pose du conteneur, en suivant une rampe (40), les rouleaux pouvant rouler sur les rampes (40) des logements de rouleaux pour le placement et la descente du conteneur (12) roulant,
**caractérisé en ce que**
le dispositif de sécurité est formé d'un élément (50, 50', 50'') d'arrêt sur un chariot (22) qui, dans la région de la cavité (30) du logement de rouleau du chariot (22), peut pivoter entre une position de pivotement supérieure et une position de pivotement inférieure, dans lequel l'élément (50, 50', 50'') d'arrêt dépasse de la rampe (40) dans la position de pivotement supérieure derrière le rouleau (38) du conteneur se trouvant dans la cavité (30) de logement de rouleau et recouvre, partiellement ou complètement, le rouleau (38) du conteneur, tandis que l'élément (50, 50', 50'') d'arrêt s'abaisse dans sa position de déblocage (position de pivotement inférieure), en-dessous de la face supérieure de la rampe (40) et ainsi le rouleau (38) du conteneur peut rouler dessus, l'élément (50, 50', 50'') d'arrêt étant mis dans la position de pivotement supérieure ou inférieure souhaitée et y étant maintenu par la force de pesanteur proprement dite et/ou au moyen d'un dispositif (54, 56, 58, 60, 62) de déplacement configuré par une pièce (64) formant obstacle agissant directement ou indirectement sur l'élément (50, 50', 50'') d'arrêt en liaison avec le déplacement du chariot ou par des combinaisons de ces mesures.

6. Dispositif de sécurité pour des rouleaux (38) de conteneur sur un véhicule (10) de transport pour le transport de conteneurs (12) roulants suivant la revendication 5,
**caractérisé en ce que**
le coussinet (52) de pivotement de l'élément (50, 50', 50'') d'arrêt est disposé en-dessous de la rampe (40) ou en-dessous du rouleau (38) de conteneur se trouvant dans la cavité (30) du logement de rouleau.

7. Dispositif de sécurité pour des rouleaux (38) de conteneur sur un véhicule (10) de transport pour le transport de conteneurs (12) roulants suivant au moins l'une des revendications 5 ou 6,
**caractérisé en ce que**
le dispositif de déplacement pour le déplacement de l'élément (50, 50', 50'') d'arrêt comprend au moins un ressort en acier (60) ; en caoutchouc ou pneumatique ; un vérin de travail pneumatique ou hydraulique ou un entraînement électrique ou une combinaison de ceux-ci.

8. Dispositif de sécurité pour des rouleaux (38) de conteneur sur un véhicule (10) de transport pour le transport de conteneurs (12) roulants suivant au moins l'une des revendications précédentes,
**caractérisé en ce que**
l'élément (50, 50', 50'') d'arrêt a une épaisseur supérieure ou égale à deux centimètres.

9. Dispositif de sécurité pour des rouleaux (38) de conteneur sur un véhicule (10) de transport pour le transport de conteneurs (12) roulants suivant au moins l'une des revendications précédentes,
**caractérisé en ce que**
l'élément (50, 50', 50'') d'arrêt est composé de deux ou plusieurs éléments parallèles.

10. Dispositif de sécurité pour des rouleaux (38) de conteneur sur un véhicule (10) de transport pour le transport de conteneurs (12) roulants suivant au moins l'une des revendications précédentes,
**caractérisé en ce que**
l'élément (50'') d'arrêt possède, pour le déplacement sur une pièce (64) formant obstacle, dans la partie inférieure, au moins un arrondi ou est pourvu d'un rouleau (62).

11. Dispositif de sécurité pour des rouleaux (38) de conteneur sur un véhicule (10) de transport pour le transport de conteneurs (12) roulants suivant au moins l'une des revendications précédentes,
**caractérisé en ce que**
la sécurité par l'élément (50, 50', 50'') d'arrêt est réalisée unilatéralement pour un rouleau (38) de conteneur ou par paire, pour deux rouleaux roulant sur le chariot (22).

12. Dispositif de sécurité pour des rouleaux (38) de conteneur sur un véhicule (10) de transport pour le transport de conteneurs (12) roulants suivant au moins l'une des revendications précédentes,
**caractérisé en ce que**
il a au moins un capteur pour détecter au moins une position de pivotement de préférence la position de pivotement supérieure de sécurisation de l'élément d'arrêt.

13. Véhicule (10) de transport pour le transport de conteneurs (12) roulants,
ayant un dispositif de sécurité pour des rouleaux (38) de conteneur suivant au moins l'une des revendications 5 à 12,
**caractérisé en ce que**
sur un châssis (11) du véhicule (10) de transport est prévue une pièce (64) formant obstacle, qui a un biseau (66) qui est disposée dans la partie de la position (26) de pose du conteneur en-dessous du chariot (22) de manière à ce que l'élément (50'') d'arrêt se déplace, lorsque le chariot vient dans la position (26) de pose du conteneur, en ayant son contour inférieur sur la voie montante dans le sens de déplacement et ainsi tourne de la position de pivotement supérieure à la position de pivotement inférieure.

14. Véhicule (10) de transport pour le transport de conteneurs (12) roulants,
ayant un dispositif de sécurité pour des rouleaux (38) de conteneur suivant au moins l'une des revendications 5 à 12,
**caractérisé en ce que**
sur un châssis (11) du véhicule (10) de transport est montée une pièce (64) formant obstacle, dans la région de la position (28) de transport du chariot ou en commençant avant, en-dessous d'une voie (24) à rail pour le chariot (22) de manière à ce que l'élément (50') d'arrêt heurte la pièce formant obstacle par sa partie (58) inférieure directement ou au moyen d'éléments (54) d'accouplement, lorsque le chariot vient dans la position (26) de transport de conteneur ou se déplace sur la pièce formant obstacle, et pivote ainsi de la position de pivotement inférieure à la position de pivotement supérieure.
